(19) Europäisches Patentamt
European Patent Office
Office européen des brevets

(11) EP 2 652 008 B1

(12) # EUROPÄISCHE PATENTSCHRIFT

(45) Veröffentlichungstag und Bekanntmachung des Hinweises auf die Patenterteilung:
**22.10.2014 Patentblatt 2014/43**

(21) Anmeldenummer: **11793465.3**

(22) Anmeldetag: **12.12.2011**

(51) Int Cl.:
***C08G 64/32*** (2006.01) ***C08G 64/34*** (2006.01)
***C08L 69/00*** (2006.01)

(86) Internationale Anmeldenummer:
**PCT/EP2011/072489**

(87) Internationale Veröffentlichungsnummer:
**WO 2012/080192 (21.06.2012 Gazette 2012/25)**

(54) **VERFAHREN ZUR HERSTELLUNG VON POLYETHERCARBONATPOLYOLEN MIT PRIMÄREN HYDROXYL-ENDGRUPPEN UND DARAUS HERGESTELLTE POLYURETHANPOLYMERE**

METHOD FOR PRODUCING POLYETHER CARBONATE POLYOLS HAVING PRIMARY HYDROXYL END GROUPS AND POLYURETHANE POLYMERS PRODUCED THEREFROM

PROCÉDÉ DE PRODUCTION DE POLYOLS DE POLYÉTHERCARBONATE COMPRENANT DES GROUPES TERMINAUX HYDROXYLE PRIMAIRES ET POLYMÈRES DE POLYURÉTHANE PRODUITS À PARTIR DE CEUX-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2010 EP 10195634**

(43) Veröffentlichungstag der Anmeldung:
**23.10.2013 Patentblatt 2013/43**

(73) Patentinhaber: **Bayer Intellectual Property GmbH**
**40789 Monheim am Rhein (DE)**

(72) Erfinder:
- **HOFMANN, Jörg**
  **47800 Krefeld (DE)**
- **GÜRTLER, Christoph**
  **50676 Köln (DE)**
- **NEFZGER, Hartmut**
  **50259 Pulheim (DE)**
- **HAHN, Norbert**
  **50226 Frechen (DE)**
- **LORENZ, Klaus**
  **41539 Dormagen (DE)**
- **MÜLLER, Thomas Ernst**
  **81827 München (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**WO-A1-2008/058913 US-A- 4 487 853**
**US-A1- 2008 021 154**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Polyethercarbonatpolyolen mit primären Hydroxyl-Endgruppen, umfassend die Schritte der Reaktion einer aktive Wasserstoffatome aufweisenden Starterverbindung mit einem Epoxid und Kohlendioxid unter Doppelmetallcyanid-Katalyse, der Reaktion des erhaltenen Produktes mit einem zyklischen Carbonsäureanhydrid sowie der Reaktion dieses erhaltenen Produktes mit Ethylenoxid in Gegenwart eines Katalysators, welcher pro Molekül mindestens ein Stickstoffatom umfasst, wobei nicht-zyklische, identisch substituierte tertiäre Amine ausgenommen sind. Die Erfindung betrifft weiterhin gemäß diesem Verfahren erhältliche Polyethercarbonatpolyole, Zusammensetzungen umfassend diese Polyole sowie Polyurethanpolymere auf der Basis dieser Polyole.

Durch Doppelmetallcyanid-Katalyse (DMC-Katalyse) hergestellte langkettige Polyetherpolyole werden auch als IMPACT-Polyether bezeichnet. Sie weisen systembedingt überwiegend sekundäre Hydroxylendgruppen auf. Der Einsatz von Ethylen-/Propylenoxidgemischen (EO/PO) ist nur bis zu einem bestimmten Anteil an EO möglich; somit sind langkettige Polyetherpolyole mit überwiegend primären Hydroxylendgruppen nach dem Impactverfahren nicht zugänglich. Stattdessen werden derartige Polyether entweder dadurch erhalten, dass ausschließlich mit konventioneller Basenkatalyse (zum Beispiel KOH) katalysiert wird oder in zweistufiger Verfahrensweise auf einen mittels DMC-Katalyse erhaltenen IMPACT-PO-Polyether, gegebenenfalls einen PO/EO-Mischpolyether beziehungsweise einen PO/EO-Mischendblock aufweisenden Polyether, unter KOH-Katalyse ein EO-Endblock aufpolymerisiert wird.

Das KOH-Verfahren weist generell den Nachteil auf, dass dieser Katalysator aufwendig, zum Beispiel durch Neutralisation und Filtration, abgetrennt werden muss. Darüber hinaus entstehen insbesondere bei langkettigen Polyethern unerwünschte olefinische Endgruppen als Nebenprodukte. Derartige olefinische Endgruppen oder Allylether-Endgruppen vermindern die Funktionalität dieser Polyether und erschweren ihren Einsatz in bestimmten Anwendungen. Auch führen sie zu Polyurethan- (PUR-)Produkten, die qualitativ schlechter sind.

Die Herstellung von Polyethercarbonatpolyolen durch katalytische Umsetzung von Alkylenoxiden (Epoxiden) und Kohlendioxid in An- oder Abwesenheit von H-funktionellen Startersubstanzen (Startern) wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion z.B. unter Verwendung einer H-funktionellen Startverbindung ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Formel (I) gezeigte cyclische Carbonat (beispielsweise für R = $CH_3$ Propylencarbonat).

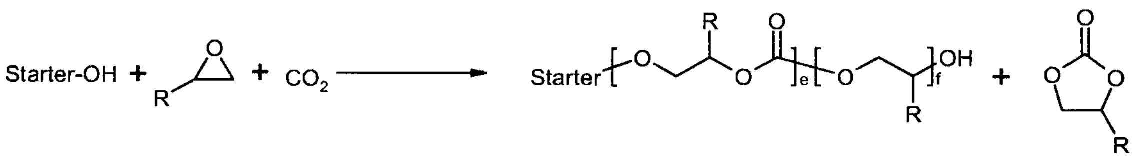
(I)

US 4,487,853 offenbart ein Verfahren zur Herstellung eines Polyetheresterpolyols mit einem hohen Gehalt an primären Hydroxylgruppen. In diesem Verfahren werden bei einer Temperatur von 50 °C bis 125 °C a) das Reaktionsprodukt eines Kondensats eines Polyols mit einem Alkylenoxid mit einem zyklischen Carbonsäureanhydrid und b) Ethylenoxid zur Reaktion gebracht. Das Kondensat wird aus einem Polyol mit 2 bis 8 Hydroxylgruppen und einem Äquivalentgewicht von 30 bis 45 sowie einem Alkylenoxid mit 2 bis 4 Kohlenstoffatomen und Mischungen davon erhalten. Das Kondensat weist ein Äquivalentgewicht von 500 bis 10000 auf. Nach Reaktion mit dem zyklischen Carbonsäureanhydrid wird ein Halbester erhalten. Die Reaktion von a) mit Ethylenoxid findet in Gegenwart einer wirksamen Menge eines Amins, Oxids oder zweiwertigen Metallkatalysators statt. Das Verhältnis der Äquivalente des Anhydrids zu den Äquivalenten des Kondensats liegt im Bereich von ungefähr 1:1 bis ungefähr 1:2 und das Molverhältnis von Ethylenoxid zu Anhydrid liegt im Bereich von ungefähr 2:1 bis ungefähr 1,5:1. Offenbart wird weiterhin ein Polyurethan aus der Reaktion eines organischen Polyisocyanats mit solchen Polyolen. Es wird jedoch in US 4,487,853 nicht beschrieben, wie unter DMC-Katalyse hergestellte Polyetherpolyole unter möglichst geringem Verfahrensaufwand in Polyole mit primären Hydroxyl-Endgruppen überführt werden können.

Folglich besteht weiterhin der Bedarf an Herstellungsverfahren für Polyethercarbonatpolyole mit primären Hydroxyl-Endgruppen und insbesondere an solchen Verfahren, welche mit DMC-Katalyse hergestellte Polyethercarbonate

umsetzen.

Überraschend wurde gefunden, dass die Aufgabe gelöst werden kann durch ein Verfahren zur Herstellung von Polyethercarbonatpolyolen mit primären Hydroxyl-Endgruppen, umfassend die Schritte:

1. Reaktion einer aktive Wasserstoffatome aufweisenden Starterverbindung mit Kohlendioxid und mit mindestens einem Epoxid (Alkylenoxid) der allgemeinen Formel (II):

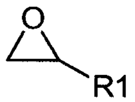

(II)

wobei R1 für Wasserstoff, einen Alkylrest oder einen Arylrest steht und mit der Maßgabe, dass ≥ 0 Gewichts-% bis ≤ 30 Gewichts-%, bezogen auf die Gesamtmenge des eingesetzten Epoxids (II), Ethylenoxid sind,
wobei die Reaktion in Gegenwart eines Doppelmetallcyanid-Katalysators (DMC-Katalysators) durchgeführt wird und wobei vorzugsweise das Rohprodukt dieser Reaktion mit Ausnahme eines möglichen Destillationsschrittes keine weitere Aufreinigung erfährt;

2. Reaktion des in Schritt 1. erhaltenen Produkts mit einem zyklischen Carbonsäureanhydrid; und

3. Reaktion des in Schritt 2. erhaltenen Produkts mit Ethylenoxid in Gegenwart eines Katalysators, welcher pro Molekül mindestens ein Stickstoffatom umfasst, wobei nicht-zyklische, identisch substituierte tertiäre Amine ausgenommen sind.

Ein Vorteil des erfindungsgemäßen Verfahrens ist, dass unter DMC-Katalyse hergestellte Polyethercarbonatpolyole, welche auch bei hohen mittleren Molekülmassen keine oder eine technisch unbedeutende Abweichung der tatsächlichen von der idealen OH-Funktionalität zeigen, zu Polyethercarbonatpolyolen mit einem höheren Anteil an primären Hydroxyl-Endgruppen (im Folgenden auch kurz als "primäre OH-Gruppen" bezeichnet) reagieren. Dadurch, dass nach dem ersten Schritt die Entfernung des Katalysators entfällt, lässt sich eine Vereinfachung des Gesamtverfahrens erreichen.

Als aktive Wasserstoffatome aufweisende Starterverbindungen (auch als H-funktionelle Startersubstanz bezeichnet) im Schritt 1. werden vorzugsweise Verbindungen mit (zahlenmittleren) Molekulargewichten von ≥ 18 g/mol bis ≤ 2000 g/mol, bevorzugt ≥ 62 g/mol bis ≤ 2000 g/mol und mit einer Anzahl an Hydroxylgruppen pro Molekül von ≥ 1 bis ≤ 8, bevorzugt ≥ 2 bis ≤ 4 eingesetzt. Beispiele hierfür sind Ethylenglykol, Diethylenglykol, Triethylenglykol, 1,2-Propylenglykol, Dipropylenglykol, 1,4-Butandiol, Hexamethylenglykol, Bisphenol A, Bisphenol F, Trimethylolpropan, Glycerin, Ricinusöl, Pentaerythrit, Sorbit, Rohrzucker, abgebaute Stärke und/oder Wasser.

Besonders bevorzugt werden im Schritt 1. als H-funktionelle Startersubstanzen (Starterverbindungen) solche Verbindungen mit zahlenmittleren Molekulargewichten von ≥ 450 g/mol bis ≤ 2000 g/mol oder eine Mischung aus a) Verbindungen mit zahlenmittleren Molekulargewichten von ≥ 62 g/mol bis < 450 g/mol (im Folgenden auch als "niedermolekulare Starterverbindung" bezeichnet) und b) Verbindungen mit zahlenmittleren Molekulargewichten von ≥ 450 g/mol bis ≤ 2000 g/mol (im Folgenden auch als "Starterpolyole" bezeichnet) eingesetzt, die vorzugsweise jeweils ≥ 1 bis ≤ 8, bevorzugt ≥ 2 bis ≤ 5 Hydroxylgruppen enthalten.

Beispiele für niedermolekulare Starterverbindungen sind Ethylenglykol, Diethylenglykol, Triethylenglykol, 1,2-Propylenglykol, Dipropylenglykol, 1,4-Butandiol, Hexamethylenglykol, Bisphenol A, Bisphenol F, Trimethylolpropan, Glycerin, Ricinusöl, Pentaerythrit, Sorbit und/oder Rohrzucker. Beispiele für Starterpolyole sind zum Beispiel Polyetherpolyole, die beispielsweise aus den zuvor genannten niedermolekularen Starterverbindungen und Epoxiden hergestellt wurden, oder Poly(oxyalkylen)carbonat-Polyole, die beispielsweise aus den zuvor genannten Starterverbindungen, Epoxiden und $CO_2$ hergestellt wurden, wobei diese Starterpolyole jeweils zahlenmittlere Molekulargewichte von ≥ 450 g/mol bis ≤ 2000 g/mol aufweisen.

Das Epoxid der allgemeinen Formel (II) ist vorzugsweise ein terminales Epoxid mit einem Substituenten R1, welcher Wasserstoff, ein Alkylrest oder ein Arylrest sein kann. Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten. Es ist möglich, dass auch Mischungen verschiedener Epoxide im erfindungsgemäßen Verfahren eingesetzt werden können, solange die Bestandteile der Epoxidmischung alle unter die allgemeine Formel (II) fallen. Bei Verwendung von Mischungen verschiedener Epoxide ist es auch möglich, das Mischungsverhältnis der Epoxide während der Dosierung stufenweise oder kontinuierlich zu verändern. Allgemein können für das erfindungsgemäße Verfahren Epoxide mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropylmethyl-dimethoxysilan, 3-Glycidyloxypropyl-ethyldiethoxysilan und 3-Glycidyloxypropyltrisopropoxysilan, jeweils mit der Maßgabe, dass ≥ 0 Gewichts-% bis ≤ 30 Gewichts-%, bezogen auf die Gesamtmenge des eingesetzten Epoxids (II), Ethylenoxid sind. Vorzugsweise werden als Alkylenoxide ≥ 0 Gewichts-% bis ≤ 30 Gewichts-% (bezogen auf die Gesamtmenge des eingesetzten Epoxids (I)) Ethylenoxid und ≥ 30 Gewichts-% bis ≤ 100 Gewichts-% (bezogen auf die Gesamtmenge des eingesetzten Epoxids (II)) Propylenoxid, besonders bevorzugt reines Propylenoxid eingesetzt.

Die für Schritt 1. (Copolymerisation) des erfindungsgemäßen Verfahrens geeigneten Doppelmetallcyanid-Katalysatoren (DMC-Katalysatoren) sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Es ist auch möglich, die in EP Anmeldenummer 10163170.3 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (III),

$$M(X)_n \qquad (III)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,

oder geeignete cyanidfreie Metallsalze besitzen die allgemeine Formel (IV),

$$M_r(X)_3 \qquad (IV)$$

wobei

M ausgewählt ist aus den Metallkationen $Fe^{3+}$, $Al^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalate ist und
r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (VI),

$$M(X)_t \qquad (VI)$$

wobei

M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VII)

$$(Y)_a\, M'(CN)_b\, (A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$, $Ba^{2+}$),
A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x'},(CN)_y]_z \qquad (VIII),$$

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x=3, x'=1, y=6 und z=2,

M = Zn(II), Fe(II), Co(II) oder Ni(II) und
M' = Co(III), Fe(III), Cr(III) oder Ir(III).

Beispiele geeigneter Doppelmetallcyanidverbindungen sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086 offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, PolyaLkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, (also mindestens ein molares Verhältnis von cyanidfreiem Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung,

bei Temperaturen von im allgemeinen 20 - 100°C und bei Drücken von im allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Der Katalysator kann beispielsweise in einem Anteil, bezogen auf die Gesamtmasse von eingesetzter Starterverbindung und Epoxid (II), von ≥ 1 ppm bis ≤ 1000 ppm und vorzugsweise von ≥ 10 ppm bis ≤ 500 ppm eingesetzt werden.

Im erfindungsgemäßen Verfahren ist vorgesehen, dass in Schritt 1. das Epoxid (II) zu höchstens 30 Gewichts-% Ethylenoxid enthält. Es wurde festgestellt, dass bei höheren Ethylenoxid-Gehalten keine zufriedenstellenden Reaktionsprodukte für die Weiterverarbeitung in den darauffolgenden Schritten des Verfahrens erhalten werden.

Im Rahmen der vorliegenden Erfindung ist vorgesehen, dass das Rohprodukt der Reaktion aus Schritt 1. mit Ausnahme eines möglichen Destillationsschrittes keine weitere Aufreinigung erfährt. Dieser Destillationsschritt ist folglich optional. Durch die Destillation kann beispielsweise nicht umgesetztes Epoxid (II) von dem erhaltenen Polyol entfernt werden. Aufreinigungsschritte, die auf das Produkt gerade nicht angewandt werden, wären zum Beispiel eine Filtration, eine Lösungsmittelextraktion oder eine chromatographische Reinigung. Hierin liegt ein Vorteil des erfindungsgemäßen Verfahrens, da kostenintensive Aufreinigungsschritte für gemäß dem KOH-Verfahren hergestellte Polyetherpolyole vermieden werden. Ein gesonderter Aufreinigungsschritt ist nicht nötig, da die Doppelmetallcyanid-Katalysatoren im Rohprodukt verbleiben können, ohne dass sie die Folgereaktionen stören und weiterhin in nur geringen Mengen benötigt werden.

Im Schritt 1. (Copolymerisation) kann die Dosierung eines oder mehrerer Epoxide und des Kohlendioxids simultan oder sequentiell erfolgen, wobei die gesamte Kohlendioxidmenge auf einmal oder dosiert über die Reaktionszeit zugegeben werden kann. Vorzugsweise erfolgt eine Dosierung des Kohlendioxids. Die Dosierung eines oder mehrerer Epoxide erfolgt simultan oder sequentiell zur Kohlendioxid Dosierung. Werden mehrere Epoxide zur Synthese der Polyethercarbonatpolyole eingesetzt, so kann deren Dosierung simultan oder sequentiell über jeweils separate Dosierungen erfolgen oder über eine oder mehrere Dosierungen, wobei mindestens zwei Epoxide als Gemisch dosiert werden. Über die Art der Dosierung der Epoxide und des Kohlendioxids ist es möglich, statistische, alternierende, blockartige oder gradientenartige Polyethercarbonatpolyole zu synthetisieren. Die Konzentration an freien Epoxiden während der Reaktion in der Reaktionsmischung beträgt vorzugsweise > 0 bis 40 Gew.%, besonders bevorzugt > 0 - 25 Gew-%, höchst bevorzugt > 0 - 15 Gew.-% (jeweils bezogen auf das Gewicht der Reaktionsmischung).

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Für das erfindungsgemäße Verfahren hat sich weiterhin gezeigt, dass die Copolymerisation zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, kommt die Reaktion zum Erliegen. Bei Temperaturen oberhalb von 150°C steigt die Menge an unerwünschten Nebenprodukten stark an. Weiterhin ist zu beachten, dass das $CO_2$ bei der Wahl von Druck und Temperatur vom gasförmigen Zustand möglichst in den flüssigen und/oder überkritischen flüssigen Zustand übergeht. $CO_2$ kann jedoch auch als Feststoff in den Reaktor gegeben werden und dann unter den gewählten Reaktionsbedingungen in den flüssigen und/oder überkritischen flüssigen Zustand übergehen.

In einer weiteren Ausführungsform des Schrittes 1. des erfindungsgemäßen Verfahrens (im Folgenden auch als "Semi-batch Anwendung" bezeichnet) werden in Schritt 1. ein oder mehrere Starterpolyole, Kohlendioxid und der DMC-Katalysator im Reaktorsystem vorgelegt und eine oder mehrere niedermolekulare Starterverbindungen werden kontinuierlich gemeinsam mit einem oder mehreren Alkylenoxiden B1) zugeführt. Hierbei entspricht die Summe der eingesetzten Mengen an Starterpolyolen und niedermolekularen Starterverbindungen der Gesamtmenge an in Schritt 1. eingesetzten Starterverbindungen. Vorzugsweise wird die Dosierung der niedermolekularen Starterverbindungen und die eines oder mehrerer Alkylenoxide gleichzeitig beendet, oder die niedermolekularen Starterverbindungen und eine erste Teilmenge an einem oder mehreren Alkylenoxiden werden zunächst gemeinsam zudosiert und anschließend die zweite Teilmenge an einem oder mehreren Alkylenoxiden zudosiert, wobei die Summe der ersten und zweiten Teilmenge an einem oder mehreren Alkylenoxiden der Gesamtmenge der in Schritt 1. eingesetzten Menge an einem oder mehreren Alkylenoxiden entspricht. Die erste Teilmenge beträgt 60 bis 90 Gew.-% und die zweite Teilmenge beträgt 40 bis 10 Gew.-% der in Schritt 1. eingesetzten Gesamtmenge an Alkylenoxid. Nach der Zudosierung dieser Einsatzstoffe kann sich eine Nachreaktionsphase anschließen, in der der Verbrauch an Alkylenoxid durch Überwachung des Drucks quantifiziert werden kann. Nach Erreichen von Druckkonstanz kann das Endprodukt (gegebenenfalls nach Anlegen von Vakuum oder durch Strippen zur Entfernung von nicht umgesetzen Alkylenoxiden) aus dem Reaktor abgelassen werden. Die Menge der Starterverbindungen, die während der Reaktion kontinuierlich in den Reaktor zudosiert werden, beträgt bevorzugt mindestens 20 mol% Äquivalente, besonders bevorzugt 70 bis 95 mol% Äquivalente (jeweils bezogen auf

die gesamte Menge an Starterverbindungen).

In einer weiteren Ausführungsform des Schrittes 1. des erfindungsgemäßen Verfahrens (im Folgenden auch als "kontinuierliche Anwendung" bezeichnet) wird das aus Schritt 1. resultierende Produkt kontinuierlich dem Reaktor entnommen. In dieser Verfahrensweise werden in Schritt 1. ein oder mehrere Starterpolyole, Kohlendioxid und DMC-Katalysator im Reaktorsystem vorgelegt und eine oder mehrere niedermolekulare Starterverbindungen werden kontinuierlich gemeinsam mit einem oder mehreren Alkylenoxiden B1) und DMC-Katalysator zugeführt und das aus Schritt 1. resultierende Produkt wird dem Reaktor kontinuierlich entnommen, wobei der Druck gegebenenfalls durch Nachdosierung von Kohlendioxid bei dem oben genannten Gesamtdruck während des Verfahrens konstant gehalten wird.

Besonders bevorzugte Reaktoren sind: Rohrreaktor, Rührkessel, Schlaufenreaktor. Bei der Herstellung der Polyethercarbonatpolyole in einem Rührkessel sollte aus Sicherheitsgründen der Gehalt an freiem Epoxid (Alkylenoxid) 15 Gew.-% im Reaktionsgemisch des Rührkessels nicht übersteigen (siehe beispielsweise WO-A 2004/081082, Seite 3; Zeile 14). Bei der Herstellung der Polyethercarbonatpolyole in der Semi-batch Anwendung wie auch in der kontinuierlichen Anwendung sollte daher die Dosiergeschwindigkeit des Epoxids entsprechend eingestellt werden, so dass das Epoxid genügend schnell abreagiert und durch die Zudosierung von Epoxid der Gehalt an freiem Epoxid 15 Gew.-% im Reaktionsgemisch des Rührkessels nicht übersteigt. Es ist möglich, das Kohlendioxid kontinuierlich oder diskontinuierlich zuzuführen. Der Druck des Kohlendioxids kann bei der Copolymerisation variieren. Es ist möglich, während der Zugabe des Epoxids den $CO_2$-Druck allmählich zu steigern oder zu senken oder gleich zu lassen. Auch kann ein Teil der Zugabe des Epoxids in Abwesenheit von $CO_2$ erfolgen, um beispielsweise einen Teilabschnitt des entstehenden Copolymers aus reinem Epoxid aufzubauen.

Die aktivierte Katalysator-Starter-Mischung kann im Rührkessel, aber auch in einem anderen Reaktionsbehältnis (Rohrreaktor oder Schlaufenreaktor) mit Epoxid und Kohlendioxid (weiter) copolymerisiert werden.

Beim Rohrreaktor werden aktivierter Katalysator und Starter sowie Epoxid und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner überkritischen Form, also quasi flüssig, zudosiert, um eine bessere Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden. Häufig ist es nämlich apparativ nicht möglich, turbulente Strömungsverhältnisse mit guter Durchmischung einzustellen, so dass nur ein laminares Strömungsprofil vorliegt.

Selbst Schlaufenreaktoren können zur Herstellung von Polyethercarbonatpolyolen verwendet werden. Diese sind Rohrreaktoren mit Stoffrückführung. Der Einsatz eines Schlaufenreaktors ist insbesondere deshalb von Vorteil, weil hier eine Rückvermischung realisiert werden kann, so dass die Epoxid-Konzentration gering sein sollte. Um vollständigen Umsatz zu realisieren, ist häufig ein Rohr ("Verweilrohr") nachgeschaltet.

Die erfindungsgemäß erhaltenen Polyethercarbonatpolyole haben eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Schritt 1. können Aktivierungsschritte (in An- oder Abwesenheit von Kohlendioxid) zur Aktivierung des eingesetzten DMC-Katalysators vorhergehen. Bei Durchführung der Copolymerisation in einem Rührkessel kann der vorgelagerte Schritt zur Aktivierung des DMC-Katalysators beispielsweise im Rührkessel erfolgen, der anschließend zur Copolymerisation eingesetzt wird, oder alternativ in einem vorgeschalteten Reaktor erfolgen, der selbst wiederum ein Rohrreaktor oder ein Rührkessel sein kann. Bei Durchführung der Copolymerisation in einem Rohrreaktor kann der vorgelagerte Schritt zur Aktivierung des DMC-Katalysators beispielsweise in einem ersten Teilabschnitt des Rohrreaktors erfolgen oder aber in einem vorgeschalteten Reaktor erfolgen, der selbst wiederum ein Rohrreaktor oder ein Rührkessel sein kann.

Als Aktivierungsschritt des DMC-Katalysators wird ein Schritt bezeichnet, bei dem eine Teilmenge des Epoxids (II), gegebenenfalls in Gegenwart von $CO_2$, zum DMC-Katalysator gegeben wird und dann die Zugabe des Epoxids unterbrochen wird, wobei aufgrund einer folgenden exothermen chemischen Reaktion eine Temperaturspitze ("Hotspot") und/oder ein Druckabfall im Reaktor (bei Durchführung im Rührkessel) beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Hotspot. Im Allgemeinen kann dem Aktivierungsschritt ein Schritt zum Trocknen des DMC-Katalysators und ggf. der H-funktionellen Starterverbindung durch erhöhte Temperatur und/oder reduziertem Druck vorgelagert sein, wobei dieser Schritt der Trocknung nicht Teil des Aktivierungsschrittes im Sinne der vorliegenden Erfindung ist.

In Schritt 2. des erfindungsgemäßen Verfahrens wird das Produkt aus Schritt 1 weiter umgesetzt. Hierbei werden endständige Hydroxyl-Gruppen des erhaltenen Polyethercarbonatpolyols mit einem zyklischen Carbonsäureanhydrid zur Reaktion gebracht. Man erhält unter Öffnung der Anhydridgruppe eine Esterbindung zu dem Polyethercarbonatpolyol sowie eine weitere freie Carboxylgruppe. Optional wird die Reaktion in Gegenwart eines Katalysators durchgeführt, welcher pro Molekül mindestens ein Stickstoffatom umfasst. Vorzugsweise ist dieses ein organisches Molekül, so dass es sich bei dem Katalysator um ein organisches Amin handelt. Ausgenommen sind jedoch nicht-zyklische, identisch substituierte tertiäre Amine. Ein Beispiel für solch ein nicht geeignetes Amin ist Triethylamin. Wenn ein Katalysator eingesetzt wird, ist er vorteilhafterweise derselbe Katalysator wie im nachfolgenden Schritt 3.

Die Menge des stickstoffhaltigen Katalysators, bezogen auf die Gesamtmasse des Reaktionsansatzes in Schritt 2., kann beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen. Die Reaktionstemperatur in Schritt 2. kann dabei ≥ 70 °C bis ≤ 150 °C und vorzugsweise ≥ 80 °C bis ≤ 135 °C betragen.

Schritt 3. des erfindungsgemäßen Verfahrens betrifft die Reaktion des in Schritt 2. erhaltenen Produkts mit Ethylenoxid. Durch die Reaktion der Carboxyl-Gruppen des Polyethercarbonats entstehen unter Ringöffnung Hydroxyalkylgruppen. Vorzugsweise reagieren ≥ 80%, ≥ 90% oder ≥ 95% der Carboxyl-Gruppen mit dem Epoxid und es wird vorzugsweise ein Anteil an primären Hydroxyl-Gruppen von ≥ 50 Mol-% bis ≤ 100 Mol-% oder von ≥ 60 Mol-% bis ≤ 90 Mol-% erhalten.

Erfindungsgemäß vorgesehen ist, dass diese Reaktion in Gegenwart eines Katalysators durchgeführt, welcher pro Molekül mindestens ein Stickstoffatom umfasst. Vorzugsweise ist dieses ein organisches Molekül, so dass es sich bei dem Katalysator um ein organisches Amin handelt. Erfindungsgemäß ausgenommen sind jedoch nicht-zyklische, identisch substituierte tertiäre Amine. Ein Beispiel für solch ein nicht geeignetes Amin ist Triethylamin.

Die Menge des stickstoffhaltigen Katalysators, bezogen auf die Gesamtmasse des Reaktionsansatzes in Schritt 3., kann beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen. Die Reaktionstemperatur in Schritt 3. kann dabei ≥ 70 °C bis ≤ 150 °C und vorzugsweise ≥ 80 °C bis ≤ 135 °C betragen.

Vorteilhafterweise schließt sich dieser Schritt unmittelbar an Schritt 2. an, so dass zu dem Reaktionsansatz aus Schritt 2. nach Ende der Reaktion mit dem zyklischen Carbonsäureanhydrid das Ethylenoxid hinzugefügt wird.

In einer Ausführungsform des erfindungsgemäßen Verfahrens ist die in Schritt 1. eingesetzte Starterverbindung ein Poly(oxyalkylen)-Polyol (d.h. ein Polyetherpolyol) oder ein Poly(oxyalkylen)carbonat-Polyol (d.h. ein Produkt erhältlich ausgehend von einer H-funktionellen Starterverbindung durch Copolymerisation von Kohlendioxid mit Epoxid), jeweils mit einer durchschnittlichen Funktionalität von ≥ 2,0 bis ≤ 5,0, einem Zahlenmittel der Molekülmasse von ≥ 450 g/mol bis ≤ 1000 g/mol. Die durchschnittliche Funktionalität kann auch ≥ 2,3 bis ≤ 4,0 betragen. Diese Poly(oxyalkylen)-Polyole und Poly(oxyalkylen)carbonat-Polyole können auch eine OH-Zahl von 200 mg KOH/g bis ≤ 300 mg KOH/g aufweisen. Die OH-Zahl lässt sich anhand der Norm DIN 53240 bestimmen.

In einer weiteren Ausführungsform des erfindungsgemäßen Verfahrens ist in dem Epoxid der allgemeinen Formel (II) R1 Wasserstoff, Methyl, Ethyl, n-Propyl, iso-Propyl, n-Butyl, sec-Butyl, iso-Butyl, tert-Butyl, Cyclohexyl und/oder Phenyl. Bevorzugt ist hierbei, dass R1 Methyl ist. Dann ist das eingesetzte Epoxid Propylenoxid. Ebenfalls bevorzugt sind Mischungen von Propylenoxid und Ethylenoxid, so dass gemischte Polyetherblöcke erhalten werden. Es können auch nacheinander mehrere Mischungen von Propylenoxid und Ethylenoxid mit unterschiedlichen Mischungsverhältnissen eingesetzt werden.

In einer weiteren Ausführungsform des erfindungsgemäßen Verfahrens umfasst der Doppelmetallcyanid-Katalysator in Schritt 1. Zink, Kobalt und tert.-Butanol. Vorzugsweise umfasst dieser Katalysator zusätzlich ≥ 5 Gewichts-% bis ≤ 80 Gewichts-%, bezogen auf die Katalysatormenge, eines Polyethers mit einem Zahlenmittel der Molekülmasse von ≥ 500 g/mol. Der Anteil des Polyethers kann auch ≥ 10 Gewichts-% bis ≤ 70 Gewichts-% und besonders bevorzugt ≥ 15 Gewichts-% bis ≤ 60 Gewichts-% betragen. Besonders geeignete Polyether sind beispielsweise Polyetherpolyole mit einer durchschnittlichen OH-Funktionalität von 2 bis 8 und einem Zahlenmittel der Molekülmasse von ≥ 1000 g/mol bis ≤ 10000 g/mol und vorzugsweise von ≥ 1000 g/mol bis ≤ 5000 g/mol. Als Beispiel genannt seien Poly(oxypropylen)polyole, insbesondere Diole und/oder Triole mit einem Zahlenmittel der Molekülmasse von ≥ 1000 g/mol bis ≤ 4000 g/mol.

In einer weiteren Ausführungsform des erfindungsgemäßen Verfahrens ist das in Schritt 2. eingesetzte zyklische Carbonsäureanhydrid ausgewählt aus der Gruppe umfassend Phthalsäureanhydrid, Tetrahydrophthalsäureanhydrid, Bernsteinsäureanhydrid und/oder Maleinsäureanhydrid.

In einer weiteren Ausführungsform des erfindungsgemäßen Verfahrens ist der in Schritt 3. eingesetzte Katalysator ausgewählt aus der Gruppe umfassend:

(A) Amine der allgemeinen Formel (IX):

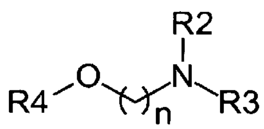

(IX)

wobei gilt:

R2 und R3 sind unabhängig voneinander Wasserstoff, Alkyl oder Aryl; oder
R2 und R3 bilden gemeinsam mit dem sie tragenden N-Atom einen aliphatischen, ungesättigten oder aromatischen Heterozyklus;
n ist eine ganze Zahl von 1 bis 10;
R4 ist Wasserstoff, Alkyl oder Aryl; oder
R4 steht für $-(CH_2)_x-N(R41)(R42)$, wobei gilt:

R41 und R42 sind unabhängig voneinander Wasserstoff, Alkyl oder Aryl; oder
R41 und R42 bilden gemeinsam mit dem sie tragenden N-Atom einen aliphatischen, ungesättigten oder aromatischen Heterozyklus;
x ist eine ganze Zahl von 1 bis 10;

(B) Amine der allgemeinen Formel (X):

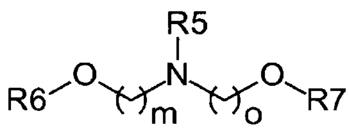

(X)

wobei gilt:

R5 ist Wasserstoff, Alkyl oder Aryl;
R6 und R7 sind unabhängig voneinander Wasserstoff, Alkyl oder Aryl;
m und o sind unabhängig voneinander eine ganze Zahl von 1 bis 10;

und/oder:

(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Der in Schritt 2. des Verfahrens optional einsetzbare Katalysator kann ebenfalls aus den beschriebenen Gruppen (A), (B) und/oder (C) ausgewählt sein.

Amine der allgemeinen Formel (IX) können im weitesten Sinne als Aminoalkohole oder deren Ether beschrieben werden. Ist R4 Wasserstoff, so sind die Katalysatoren in eine Polyurethanmatrix einbaubar, wenn das Polyethercarbonatpolyol mit einem Polyisocyanat umgesetzt wird. Dieses ist vorteilhaft, um das Austreten des Katalysators, der im Falle von Aminen mit nachteiligen Geruchsproblemen einhergehen kann, an die Polyurethanoberfläche, die sogenannte "fogging"- oder VOC (volatile organic compounds)-Problematik, zu verhindern.

Amine der allgemeinen Formel (X) können im weitesten Sinne als Amino(bis)alkohole oder deren Ether beschrieben werden. Sind R6 oder R7 Wasserstoff, so sind diese Katalysatoren ebenfalls in eine Polyurethanmatrix einbaubar.

Es ist bevorzugt, dass in dem Amin der allgemeinen Formel (IX) R2 und R3 Methyl sind, R4 Wasserstoff ist und n = 2 ist oder aber R2 und R3 Methyl sind, R4 $-(CH_2)_2-N(CH_3)_2$ ist und n = 2 ist. Insgesamt ergibt sich also entweder N,N-Dimethylethanolamin oder Bis(2-(dimethylamino)ethyl)ether.

Es ist weiterhin bevorzugt, dass in dem Amin der allgemeinen Formel (X) R5 Methyl ist, R6 und R7 Wasserstoff sind, m = 2 ist und o = 2 ist. Insgesamt ergibt sich also N-Methyldiethanolamin.

In einer weiteren Ausführungsform des erfindungsgemäßen Verfahrens beträgt in Schritt 2. das molare Verhältnis von zyklischem Anhydrid zu Hydroxylgruppen in dem in Schritt 1. erhaltenen Produkt $\geq 0,75 : 1$ bis $\leq 1,3 : 1$. Vorzugsweise beträgt das Verhältnis $> 0,95 : 1$ bis $\leq 1,25 : 1$, mehr bevorzugt $\geq 1,02 : 1$ bis $\leq 1,15 : 1$.

In einer weiteren Ausführungsform des erfindungsgemäßen Verfahrens liegt in Schritt 3. der Katalysator, welcher pro Molekül mindestens ein Stickstoffatom umfasst, bezogen auf die Gesamtmasse des Reaktionsansatzes in Schritt 3. in einem Anteil von $\geq 500$ ppm bis $\leq 1500$ ppm vor. Der Anteil des Katalysators kann auch $\geq 750$ ppm bis $\leq 1250$ ppm betragen. Gleiches gilt entsprechend, wenn in Schritt 2. auch ein solcher Katalysator eingesetzt wird.

In einer weiteren Ausführungsform des erfindungsgemäßen Verfahrens beträgt in Schritt 3. das molare Verhältnis von Ethylenoxid zu Hydroxylgruppen in dem in Schritt 1. erhaltenen Produkt $\geq 0,90 : 1$ bis $\leq 5,0 : 1$. Das Verhältnis kann auch $\geq 1,0 : 1$ bis $\leq 2,0 : 1$ oder vorzugsweise $\geq 1,05 : 1$ bis $\leq 1,2 : 1$ betragen.

Gegenstand der vorliegenden Erfindung ist weiterhin ein Polyethercarbonatpolyol mit primären Hydroxyl-Endgruppen, erhältlich durch ein erfindungsgemäßes Verfahren und umfassend einen Polyethercarbonatblock, eine endständige Hydroxyethylgruppe sowie eine den Polyethercarbonatblock und die endständige Hydroxyethylgruppe verbindende Diester-Einheit und wobei der molare Anteil an endständigen Doppelbindungen, bezogen auf alle Endgruppen des Polyethercarbonatpolyols, ≥ 0 Milliäquivalent pro kg bis ≤ 10 Milliäquivalent pro kg beträgt. Das Polyethercarbonatpolyol ist durch ein erfindungsgemäßes Verfahren erhältlich und wird insbesondere hierdurch erhalten. Daher wird zu Details seines Aufbaus auf die Ausführungen zum Verfahren verwiesen.

Der Polyethercarbonatblock kann beispielsweise, ohne hierauf beschränkt zu sein, ein auf einem di-, tri-, tetra- oder pentafunktionellen Alkohol gestarteter Block von Kohlendioxid mit Ethylenoxid, Propylenoxid, oder Ethylenoxid/Propylenoxid und/oder eine beliebige Abfolge dieser Blöcke sein. Die Anzahl der Monomereinheiten im Polyethercarbonatblock kann in einem Bereich von ≥ 10 Monomereinheiten bis ≤ 5000 Monomereinheiten, vorzugsweise von ≥ 50 Monomereinheiten bis ≤ 1000 Monomereinheiten liegen.

An den Polyethercarbonatblock schließt sich eine Diester-Einheit an, welche auf das Produkt der Reaktion einer OH-Endgruppe des Polyethercarbonatblocks mit einem zyklischen Carbonsäureanhydrid zurückgeführt werden kann. Unter Ringöffnung wird zunächst ein Halbester gebildet, welcher anschließend mit Ethylenoxid zur Hydroxyethyl-Endgruppe reagiert. Beispiele für das zyklische Carbonsäureanhydrid sind Phthalsäureanhydrid, Tetrahydrophthalsäureanhydrid, Bernsteinsäureanhydrid und/oder Maleinsäureanhydrid.

Das erfindungsgemäße Polyethercarbonatpolyol zeichnet sich dadurch aus, dass der Anteil an endständigen Doppelbindungen, bezogen auf alle Endgruppen des Polyethercarbonatpolyols (wobei hier die Gesamtheit der Polyethercarbonatpolyol-Moleküle zu verstehen ist) molmassenunabhängig im Bereich von ≥ 0 bis ≤ 10 Milliäquivalenten pro kg liegt. Für alle praktischen Zwecke ist er also frei von ungesättigten Endgruppen. Diese Endgruppen würden zu einer Minderfunktionalität des Polyethercarbonats führen und entsprechende Nachteile bei der Herstellung von Polyurethan-Polymeren mit sich bringen. Man vermeidet die endständigen Doppelbindungen beispielsweise dadurch, dass der Polyethercarbonatblock mittels DMC-Katalyse auf den Starter-Alkohol aufpolymerisiert wird. Man kann das erfindungsgemäße Polyethercarbonatpolyol mittels $^{1}$H-NMR-Spektroskopie auf das Fehlen der ungesättigten Endgruppen untersuchen. Eine weitere gebräuchliche Methode ist die Bestimmung der endständigen Doppelbindungen mittels Quecksilberacetat gemäß ISO 17710. Der Gehalt kann auch ≥ 0 Milliäquivalent pro kg bis ≤ 5 Milliäquivalent pro kg betragen. Erfindungsgemäße Polyethercarbonatpolyole können weiterhin Funktionalitäten im Bereich von ≥ 2 bis ≤ 6 und Molmassen im Bereich von ≥ 1800 Da bis ≤ 20000 Da aufweisen.

In einer Ausführungsform des erfindungsgemäßen Polyethercarbonatpolyols beträgt der molare Anteil von primären Hydroxylgruppen ≥ 50 mol-% bis ≤ 100 mol-%. Hierunter ist der molare Anteil von primären Hydroxylgruppen gegenüber sekundären Hydroxylgruppen in dem Polyethercarbonatpolyol insgesamt, also nicht auf ein einzelnes Molekül bezogen, zu verstehen. Er lässt sich zum Beispiel mittels $^{1}$H-NMR-Spektroskopie bestimmen. Der Anteil kann auch in einem Bereich von ≥ 55 mol-% bis ≤ 90 mol% oder von ≥ 60 mol-% bis ≤ 85 mol-% liegen.

In einer weiteren Ausführungsform des erfindungsgemäßen Polyethercarbonatpolyols weist dieses eine OH-Zahl von ≥ 10 mg KOH/g bis ≤ 100 mg KOH/g auf. Die Hydroxylzahl lässt sich anhand der Norm DIN 53240 bestimmen und kann auch ≥ 15 mg KOH/g bis ≤ 80 mg KOH/g oder ≥ 20 mg KOH/g bis ≤ 50 mg KOH/g betragen.

In einer weiteren Ausführungsform des erfindungsgemäßen Polyethercarbonatpolyols weist dieses eine Säurezahl von ≥ 0,01 mg KOH/g bis ≤ 5 mg KOH/g auf. Die Säurezahl lässt sich anhand der Norm DIN 53402 bestimmen und kann auch ≥ 0,02 mg KOH/g bis ≤ 4,9 mg KOH/g oder ≥ 0,02 mg KOH/g bis ≤ 4,8 mg KOH/g betragen.

Ein weiterer Gegenstand der vorliegenden Erfindung ist eine Polyethercarbonatpolyol-Zusammensetzung, umfassend ein erfindungsgemäßes Polyethercarbonatpolyol sowie weiterhin:

(A) Amine der allgemeinen Formel (XI):

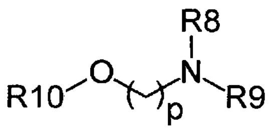

(XI)

wobei gilt:

R8 und R9 sind unabhängig voneinander Wasserstoff, Alkyl oder Aryl; oder
R8 und R9 bilden gemeinsam mit dem sie tragenden N-Atom einen aliphatischen, ungesättigten oder aromatischen Heterozyklus;
p ist eine ganze Zahl von 1 bis 10, also 1, 2, 3, 4, 5, 6, 7, 8, 9 oder 10;
R10 ist Wasserstoff, Alkyl oder Aryl; oder
R10 steht für $-(CH_2)_y-N(R11)(R12)$, wobei gilt:

R11 und R12 sind unabhängig voneinander Wasserstoff, Alkyl oder Aryl; oder

R11 und R12 bilden gemeinsam mit dem sie tragenden N-Atom einen aliphatischen, ungesättigten oder aromatischen Heterozyklus;
y ist eine ganze Zahl von 1 bis 10, also 1, 2, 3, 4, 5, 6, 7, 8, 9 oder 10;

(B) Amine der allgemeinen Formel (XII):

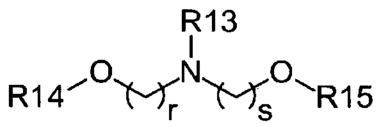

(XII)

wobei gilt:

R13 ist Wasserstoff, Alkyl oder Aryl;
R14 und R15 sind unabhängig voneinander Wasserstoff, Alkyl oder Aryl;
r und s sind unabhängig voneinander eine ganze Zahl von 1 bis 10, also 1, 2, 3, 4, 5, 6, 7, 8, 9 oder 10;

und/oder:
(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Solche Verbindungen können in bestimmten Varianten auch als sogenannte Treibkatalysatoren verwendet werden, das heißt, sie katalysieren bevorzugt die Reaktion der Isocyanatgruppen mit Wasser unter Bildung von Kohlendioxid, in geringerem Ausmaß auch deren Reaktion mit Hydroxylgruppen unter Bildung von Urethangruppen. Daher kann diese Zusammensetzung unmittelbar weiter in der Herstellung von Polyurethanen eingesetzt werden. Wenn Zerewitinoffaktive Wasserstoffatome vorhanden sind, können diese Katalysatoren in eine Polyurethanmatrix eingebaut werden. Dieses verringert den Gehalt an flüchtigen organischen Substanzen im Polyurethan. Bevorzugt sind N,N-Dimethylethanolamin, Bis(2-(dimethylamino)ethyl)ether, N-Methyldiethanolamin oder Diazabicyclo[2.2.2]octan.
Die Massenanteil dieser Verbindungen (A), (B) und/oder (C) kann relativ zum erfindungsgemäßen Polyethercarbonatpolyol beispielsweise $\geq$ 10 ppm bis $\leq$ 10000 ppm, bevorzugt $\geq$ 50 ppm bis $\leq$ 5000 ppm und mehr bevorzugt $\geq$ 100 ppm bis $\leq$ 2000 ppm betragen.
Ein weiterer Gegenstand der vorliegenden Erfindung ist ein Polyurethanpolymer, erhältlich aus der Reaktion eines Polyisocyanats mit einem erfindungsgemäßen Polyethercarbonatpolyol oder einer erfindungsgemäßen Polyethercarbonatpolyol-Zusammensetzung. Erfindungsgemäß mit eingeschlossen unter dem Begriff "Polyurethanpolymer" sind auch Prepolymere, die aus der Reaktion eines Polyisocyanats mit einem erfindungsgemäßen Polyethercarbonatpolyol oder einer erfindungsgemäßen Polyethercarbonatpolyol-Zusammensetzung erhältlich sind.
Die erfindungsgemäßen Polyethercarbonatpolyole sind beispielsweise geeignet zur Herstellung von Polyurethanweichschaumstoffen, bevorzugt von Polyurethanweichschaumstoffen mit einer Rohdichte gemäß DIN EN ISO 3386-1-98 im Bereich von $\geq$ 10 kg/m$^3$ bis $\leq$ 150 kg/m$^3$, vorzugsweise von $\geq$ 20 kg/m$^3$ bis $\leq$ 70 kg/m$^3$ und einer Stauchhärte gemäß DIN EN ISO 3386-1-98 im Bereich von $\geq$ 0,5 kPa bis $\leq$ 20 kPa (bei 40% Verformung und 4. Zyklus). Zur Herstellung der Polyurethanweichschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben. Die Polyurethanweichschaumstoffe können als Form- oder auch als Blockschaumstoffe hergestellt werden. Gegenstand der Erfindung sind daher ein Verfahren zur Herstellung der Polyurethanweichschaumstoffe, die nach diesen Verfahren hergestellten Polyurethanweichschaumstoffe, die nach diesen Verfahren hergestellten Polyurethan-Weichblockschaumstoffe bzw. Polyurethan-Weichformschaumstoffe, die Verwendung der Polyurethanweichschaumstoffe zur Herstellung von Formteilen sowie die Formteile selbst. Die nach der Erfindung erhältlichen Polyurethanweichschaumstoffe finden beispielsweise folgende Anwendung: Möbelpolsterungen, Textileinlagen, Matratzen, Automobilsitze, Kopfstützen, Armlehnen, Schwämme und Bauelemente.
Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an Isocyanat-Gruppen (NCO)-Menge an.

$$\text{Kennzahl} = [(\text{Isocyanat-Menge eingesetzt}) : (\text{Isocyanat-Menge berechnet})] \bullet 100 \qquad \text{(XIII)}$$

Polyurethanweichschaumstoffe in Sinne der vorliegenden Erfindung sind vorzugsweise solche Polyurethan-Polymere, deren Rohdichte gemäß DIN EN ISO 3386-1-98 im Bereich von ≥ 10 $kg/m^3$ bis ≤ 150 $kg/m^3$, vorzugsweise im Bereich von ≥ 20 $kg/m^3$ bis ≤ 70 $kg/m^3$ liegt und deren Stauchhärte gemäß DIN EN ISO 3386-1-98 im Bereich von ≥ 0,5 kPa bis ≤ 20 kPa (bei 40% Verformung und 4. Zyklus) liegt.

Die vorliegende Erfindung wird anhand der nachfolgenden Beispiele weiter erläutert.

Beispiele

Die verwendeten Materialien und Abkürzungen haben die folgende Bedeutung und Bezugsquellen: 2,2,2-Diazabicyclooctan : Aldrich.

Tetrahydrophthalsäureanhydrid (THPA): Aldrich.
Tegostab® B 8681: Zubereitung organo-modifizierter Polysiloxane, Firma Evonik Goldschmidt.
Tegostab® B 8715LF: Zubereitung organo-modifizierter Polysiloxane, Firma Evonik Goldschmidt.
PET 1: Polyetherpolyol mit einer OH-Zahl von ca. 28 mg KOH/g, hergestellt durch mittels KOH-katalysierter Addition von Propylenoxid und Ethylenoxid im Gewichtsverhältnis von 85 zu 15 unter Verwendung einer Mischung aus Glycerin und Sorbit als Starterverbindungen mit ca. 85 mol% primären OH-Gruppen und enthaltend 8,6 Gew.-% Füllsstoff (Copolymer im Wesentlichen aus Styrol und Acrylnitril).
PET 2: Polyetherpolyol mit einer OH-Zahl von ca. 28 mg KOH/g, hergestellt mittels KOH-katalysierter Addition von Propylenoxid und Ethylenoxid im Gewichtsverhältnis von 85 zu 15 unter Verwendung von Glycerin als Starterverbindung mit ca. 85 mol% primären OH-Gruppen.
PET 3: Polyetherpolyol mit einer OH-Zahl von 37 mg KOH / g, hergestellt mittels KOH-katalysierter Addition von Propylenoxid und Ethylenoxid im Gewichtsverhältnis von 27 zu 73 unter Verwendung von Glycerin als Starterverbindung.
Amin 1: Amin-Katalysator (2,2,2-Diazabicyclooctan 33 Gew.-%ig in Dipropylenglykol).
Amin 2: Amin-Katalysator (Bis(dimethylaminoethyl)ether 70 Gew.-%ig in Dipropylenglykol).
Amin 3: N,N-bis(3-dimethylaminopropyl)-N-isopropanolamin.
Amin 4: Amin-Katalysator Dabco® NE 300, Fa. Air Products, Hamburg, Deutschland.
Urea-Lsg. (50%ig $H_2O$): Lösung aus Harnstoff in Wasser (50 Gew.-% ig).
Sn-Kat: Zinn(II)-octoat
MDI 1: Mischung enthaltend 57 Gew.-% 4,4'-Diphenylmethandiisocyanat, 25 Gew.-% 2,4'-Diphenylmethandiisocyanat und 18 Gew.-% Polyphenylpolymethylenpolyisocyanat ("Mehrkern-MDI") mit einem NCO-Gehalt von 32,5 Gewichts-%.
TDI 1: Mischung aus 80 Gew.-% 2,4-Toluylendiisocyanat und 20 Gew.-% 2,6-Toluylendiisocyanat.

Die Analysen wurden wie folgt durchgeführt:

Dynamische Viskosität: Rheometer MCR 51 der Firma Anton Paar entsprechend DIN 53019 mit einem Messkegel CP 50-1 (Durchmesser 50 mm, Winkel 1°) bei Scherraten von 25, 100, 200 und 500 $s^{-1}$. Die erfindungsgemäßen Polyethercarbonatpolyole zeigen von der Scherrate unabhängige Viskositäten.

Bestimmung des molaren Anteils der primären OH-Gruppen: mittels $^1$H-NMR (Bruker DPX 400, Deuterochloroform)

Hydroxylzahl: anhand der Norm DIN 53240
Säurezahl: anhand der Norm DIN 53402

Das Verhältnis der primären und sekundären OH-Gruppen wurde mittels $^1$H-NMR (Bruker DPX 400, Deuterochloroform) ermittelt.

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) mit Resonanz bei 4,5 ppm, Carbonat, resultierend aus im Polyethercarbonatpolyol eingebautem Kohlendioxid mit Resonanzen bei 5,1 bis 4,8 ppm, nicht abreagiertes PO mit Resonanz bei 2,4 ppm, Polyetherpolyol (d.h. ohne eingebautes Kohlendioxid) mit Resonanzen bei 1,2 bis 1,0 ppm, das als Startermolekül (soweit vorhanden) eingebaute 1,8 Octandiol mit einer Resonanz bei 1,6 bis 1,52

ppm.

Der Molenanteil des im Polymer eingebauten Carbonats in der Reaktionsmischung wird nach Formel (XIV) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden

Unter Berücksichtigung der relativen Intensitäten wurde gemäß der folgenden Formel (XIV) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad \text{(XIV)}$$

Der Gewichtsanteil (in Gew.-%) polymer-gebundenen Carbonats (LC') in der Reaktionsmischung wurde nach Formel (XV) berechnet,

$$LC' = \frac{[F(5{,}1-4{,}8) - F(4{,}5)] * 102}{N} * 100\% \qquad \text{(XV)}$$

wobei sich der Wert für N ("Nenner" N) nach Formel (XVI) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad \text{(XVI)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (XVII) berechnet,

$$CC' = \frac{F(4{,}5) * 102}{N} * 100\% \qquad \text{(XVII)}$$

wobei sich der Wert für N nach Formel (XVI) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Die Rohdichte wurde gemäß DIN EN ISO 3386-1-98 bestimmt.

Die Stauchhärte wurde gemäß DIN EN ISO 3386-1-98 (bei 40% Verformung und 4. Zyklus) bestimmt.

Die Zugfestigkeit und Bruchdehnung wurden bestimmt gemäß DIN EN ISO 1798.

Die Druckverformungsreste DVR 50% (Ct) und DVR 75% (Ct) wurden bestimmt gemäß DIN EN ISO 1856-2001-03 bei 50% bzw. 75% Verformung.

1. Herstellung der DMC-katalysierten Vorstufen:

Vorstufe A:

In einen 1 Liter Druckreaktor mit Gasdosierungseinrichtung wurden 141 mg getrockneter DMC-Katalysator (hergestellt gemäß Beispiel 6 von WO-A 01/80994) sowie getrocknetes 51 g 1,8-Octandiol (Starter) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde 3-mal durchgeführt. In den Reaktor wurden bei 130 °C und Abwesenheit von $CO_2$ 25 g Propylenoxid (PO) schnell eindosiert. Das Anspringen der Reaktion machte sich durch eine Temperaturspitze ("Hotspot") und durch Druckabfall auf etwa den Ausgangsdruck (ca. 1 bar) bemerkbar. Nach dem ersten Druckabfall wurden 20 g PO und dann 19 g PO schnell eindosiert, wodurch es wiederum jeweils zu einer Temperaturspitze und zu einem Druckabfall kam. Nachdem der Reaktor mit 50 bar $CO_2$ beaufschlagt worden war, wurden 50 g PO schnell eindosiert, wodurch es nach einer weiteren Wartezeit zu einer Temperaturspitze kam. Gleichzeitig dazu fing der Druck an Kohlendioxid $CO_2$ zu fallen an. Der Druck wurde so geregelt, dass bei Absinken unter den Sollwert neues $CO_2$ zugegeben wurde. Erst danach wurde das restliche Propylenoxid (435 g) kontinuierlich mit ca. 1,8 g/min in den Reaktor gepumpt, während nach 10 Minuten in Schritten von 5°C pro fünf Minuten die Temperatur auf 105 °C gesenkt wurde. Nach beendeter PO-Zugabe wurde noch 60 Minuten bei 105 °C und dem oben angegebenen Druck weitergerührt (1500 U/min). Durch Dünnschichtverdampfung wurden abschließend leichtflüchtige Bestandteile aus dem Produkt abgetrennt.

Die OH-Zahl der Vorstufe A lag bei 65,0 mg KOH/g bei einer Viskosität (25 °C) von 1375 mPas. Der $CO_2$-Gehalt im Produkt lag bei etwa 14 Gew.-%.

Vorstufe B:

In einen 1 Liter Druckreaktor mit Gasdosierungseinrichtung wurden 134 mg getrockneter DMC-Katalysator (hergestellt gemäß Beispiel 6 von WO-A 01/80994) sowie 160 g eines getrockneten trifunktionellen Poly(oxypropylen)polyols mit OH-Zahl = 235 mg KOH/g als Starter vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde 3-mal durchgeführt. In den Reaktor wurden bei 130 °C und Abwesenheit von $CO_2$ 24 g Propylenoxid (PO) schnell eindosiert. Das Anspringen der Reaktion machte sich durch eine Temperaturspitze ("Hotspot") und durch Druckabfall auf etwa den Ausgangsdruck (ca. 1 bar) bemerkbar. Nach dem ersten Druckabfall wurden 20 g PO und dann 18 g PO schnell eindosiert, wodurch es wiederum jeweils zu einer Temperaturspitze und zu einem Druckabfall kam. Nachdem der Reaktor mit 50 bar $CO_2$ beaufschlagt worden war, wurden 48 g PO schnell eindosiert, wodurch es nach einer weiteren Wartezeit zu einer Temperaturspitze kam. Gleichzeitig dazu fing der Druck an Kohlendioxid $CO_2$ zu fallen an. Der Druck wurde so geregelt, dass bei Absinken unter den Sollwert neues $CO_2$ zugegeben wurde. Erst danach wurde das restliche Propylenoxid (508 g) kontinuierlich mit ca. 1,8 g/min in den Reaktor gepumpt, während nach 10 Minuten in Schritten von 5°C pro fünf Minuten die Temperatur auf 105 °C gesenkt wurde. Nach beendeter PO-Zugabe wurde noch 60 Minuten bei 105 °C und dem oben angegebenen Druck weitergerührt (1500 U/min). Durch Dünnschichtverdampfung wurden abschließend leichtflüchtige Bestandteile aus dem Produkt abgetrennt.

Die OH-Zahl der Vorstufe B lag bei 47,1 mg KOH/g bei einer Viskosität (25 °C) von 8820 mPas. Der $CO_2$-Gehalt im Produkt lag bei 15 Gew.-%.

2. Umsetzung der DMC-katalysierten Vorstufen mit zyklischen Anhydriden und Ethylenoxid unter Amin-Katalyse:

Beispiel 1:

In einem 1 Liter-Edelstahldruckreaktor wurden 400 g der DMC-katalysierten Vorstufe A, 74,04 g Tetrahydrophthalsäureanhydrid und 0,474 g (920 ppm, bezogen auf den Gesamtansatz) 2,2,2-Diazabicyclooctan unter Stickstoff vorgelegt. Das molare Verhältnis zwischen Anhydrid und den Hydroxylgruppen der Vorstufe A betrug 1,05/1. Dann wurde auf 125 °C aufgeheizt und für 60 Minuten bei dieser Temperatur gerührt. Anschließend wurden über einen Zeitraum von 60 Minuten 40,84 g Ethylenoxid bei 125 °C in den Reaktor dosiert. Das molare Verhältnis zwischen Ethylenoxid und den Hydroxylgruppen der Vorstufe A betrug 2 / 1. Nach einer Nachreaktionszeit bei 125 °C bis zur Druckkonstanz im Reaktor (3 h) wurden leichtflüchtige Anteile bei 90 °C für 30 Minuten im Vakuum abdestilliert und das Reaktionsgemisch anschließend auf Raumtemperatur abgekühlt.

Produkteigenschaften:

| | |
|---|---|
| OH-Zahl: | 53,6 mg KOH/g |
| Säurezahl: | 0,08 mg KOH/g |
| Viskosität (25 °C): | 6415 mPas |
| Primäre OH-Gruppen: | 83 % |

Beispiel 2:

In einem 1 Liter-Edelstahldruckreaktor wurden 500 g der DMC-katalysierten Vorstufe B, 67,1 g Tetrahydrophthalsäureanhydrid und 0,60 g (1000 ppm, bezogen auf den Gesamtansatz) 2,2,2-Diazabicyclooctan unter Stickstoff vorgelegt. Das molare Verhältnis zwischen Anhydrid und den Hydroxylgruppen der Vorstufe B betrug 1,05 / 1. Dann wurde auf 125 °C aufgeheizt und für 60 Minuten bei dieser Temperatur gerührt. Anschließend wurden über einen Zeitraum von 60 Minuten 37 g Ethylenoxid bei 125 °C in den Reaktor dosiert. Das molare Verhältnis zwischen Ethylenoxid und den Hydroxylgruppen der Vorstufe B betrug 2 / 1. Nach einer Nachreaktionszeit bei 125 °C bis zur Druckkonstanz im Reaktor (3 h) wurden leichtflüchtige Anteile bei 90 °C für 30 Minuten im Vakuum abdestilliert und das Reaktionsgemisch anschließend auf Raumtemperatur abgekühlt.

Produkteigenschaften:

| | |
|---|---|
| OH-Zahl: | 42,8 mg KOH/g |
| Säurezahl: | 1,06 mg KOH/g |
| Viskosität (25 °C): | 28350 mPas |
| Primäre OH-Gruppen: | 82 % |

3. Herstellung von Polyurethan-Weichblockschaumstoffen

In für die Herstellung von Polyurethanschaumstoffen üblicher Verarbeitungsweise nach dem Einstufenverfahren werden die in den Beispielen der nachfolgenden Tabelle 1 aufgeführten Einsatzstoffe miteinander zur Reaktion gebracht.

Tabelle 1: Herstellung und Beurteilung der Polyurethan-Weichblockschaumstoffe

| | | **3** | **4** |
|---|---|---|---|
| | | (Vgl.) | |
| **Komponente A:** | | | |
| PET 1 | [Gew.-Tle] | 96,58 | 77,26 |
| Polyol aus Beispiel 2 | [Gew.-Tle] | | 19,32 |
| Wasser (zugesetzt) | [Gew.-Tle] | 2,01 | 2,01 |
| Tegostab® B 8681 | [Gew.-Tle] | 0,39 | 0,39 |
| Amin 1 | [Gew.-Tle] | 0,16 | 0,16 |
| Amin 2 | [Gew.-Tle] | 0,05 | 0,05 |
| Urea-Lsg. (50%ig $H_2O$) | [Gew.-Tle] | 0,39 | 0,39 |
| Diethanolamin | [Gew.-Tle] | 0,26 | 0,26 |
| Sn-Kat | [Gew.-Tle] | 0,16 | 0,16 |
| **Komponente B:** | | | |
| TDI 1 | [MV] | 28,01 | 28,49 |

(fortgesetzt)

| | | | |
|---|---|---|---|
| **Komponente B:** | | | |
| Kennzahl | | 110 | 110 |
| **Ergebnis:** | | | |
| Startzeit | [s] | 11 | 11 |
| Steigzeit | [s] | 90 | 95 |
| Schaumbeurteilung | | fein | fein |
| Zellstruktur | | gut | gut |
| Rohdichte | [kg/m$^3$] | 44,7 | 48,1 |
| Zugfestigkeit | [kPa] | 94 | 94 |
| Bruchdehnung | [%] | 106 | 104 |
| Stauchhärte | [kPa] | 4,84 | 5,06 |
| Abkürzungen: Vgl. = Vergleichsbeispiel, Gew.-Tle. = Gewichtsteile; MV = Gewichtsverhältnis der Komponente A zu Komponente B bei der angegebenen Kennzahl und bezogen auf 100 Gewichtsteile Komponente A. | | | |

Die erhaltenen Polyurethan-Weichblockschaumstoffe wurden einer optischen Beurteilung unterzogen. Die Klassifikation der Polyurethan-Weichblockschaumstoffe ("Schaumbeurteilung") erfolgte anhand einer Skala von grob - mittel - fein. Hierbei bedeutet eine Einstufung "grob", dass der Schaumstoff weniger als ca. 5 Zellen pro cm aufweist. Eine Einstufung "mittel" bedeutet, dass der Schaumstoff mehr als ca. 5 Zellen pro cm aufweist und weniger als ca. 12 Zellen pro cm aufweist und eine Einstufung "fein" bedeutet, dass der Schaumstoff mehr als ca. 12 Zellen pro cm aufweist.

Die Klassifikation der Schaumstoffqualität der Polyurethan-Weichblockschaumstoffe hinsichtlich der Zellstruktur erfolgte anhand einer Skala von schlecht - mittel - gut. Hierbei bedeutet eine Einstufung "schlecht", dass der Schaumstoff keine einheitliche Zellstruktur und/oder sichtbare Fehlstellen aufweist. Eine Einstufung "mittel" bedeutet, dass der Schaumstoff eine hauptsächlich einheitliche Zellstruktur mit nur wenigen sichtbaren Fehlstellen aufweist und eine Einstufung "gut" bedeutet, dass der Schaumstoff eine einheitliche Zellstruktur ohne sichtbare Fehlstellen aufweist.

Der erfindungsgemäße Polyurethan-Weichblockschaumstoff (Beispiel 4), in dem das Polyol aus Beispiel 2 verarbeitet wurde, ließ sich mit ansonsten unveränderter Rezeptur wie der Weichschaumstoff basierend auf reinem Polyol PET 1 herstellen (Vergleichsbeispiel 3), d.h. hinsichtlich Verarbeitung, Stauchhärte und Zugeigenschaften der resultierenden Weichblockschaumstoffe gab es keine wesentlichen Unterschiede zu Vergleichsbeispiel 3.

4. Herstellung von Polyurethan-Weichformschaumstoffen

In für die Herstellung von Polyurethan-Weichformschaumstoffen üblicher Verarbeitungsweise nach dem Einstufenverfahren werden die in den Beispielen der in der nachfolgenden Tabelle 2 aufgeführten Einsatzstoffe miteinander zur Reaktion gebracht. Das Reaktionsgemisch wird in eine auf 60°C geheizte Metallform des Volumens 9,7 L eingebracht und nach 5 min entformt. Die Einsatzmenge der Rohstoffe wurde so gewählt, dass eine berechnete Formteildichte von etwa 57 kg/m3 resultiert. In der Tabelle 2 angegeben ist die tatsächlich erhaltene Formteildichte, welche nach DIN EN ISO 3386-1-98 bestimmt wurde.

Tabelle 2: Herstellung und Beurteilung der Polyurethan-Weichformschaumstoffe

| | | **5** | **6** | **7** |
|---|---|---|---|---|
| **Komponente A** | | | | |
| PET 1 | [Gew.-Tle] | 75,61 | 75,61 | 56,10 |
| PET 2 | [Gew.-Tle] | 2,44 | 2,44 | 2,44 |
| Polyol aus Beispiel 2 | [Gew.-Tle] | 19,51 | 19,51 | 39,02 |
| Diethanolamin | [Gew.-Tle] | 0,98 | 0,98 | 0,98 |
| Tegostab B 8715 LF | [Gew.-Tle] | 0,98 | 0,98 | 0,98 |

(fortgesetzt)

| | | 5 | 6 | 7 |
|---|---|---|---|---|
| **Komponente A** | | | | |
| Amin 3 | [Gew.-Tle] | 0,39 | 0,39 | 0,39 |
| Amin 4 | [Gew.-Tle] | 0,10 | 0,10 | 0,10 |
| **Komponente B:** | | | | |
| MDI 1 | [MV] | 48,46 | 53,85 | 54,54 |
| Kennzahl | | 90 | 100 | 100 |
| **Ergebnis** | | | | |
| Rohdichte | [kg/m$^3$] | 56,5 | 56,7 | 58,3 |
| Stauchhärte | [kPa] | 6,55 | 9,29 | 10,99 |
| Zugfestigkeit | [kPa] | 134 | 167 | 175 |
| Bruchdehnung | [%] | 104 | 96 | 83 |
| DVR 50%/22h/70°C | [%] | 7,2 | 7,0 | 7,2 |
| DVR 75%/22h/70°C | [%] | 9,2 | 8,3 | 9,2 |
| Abkürzungen: Gew.-Tle. = Gewichtsteile; MV = Gewichtsverhältnis der Komponente A zu Komponente B bei der angegebenen Kennzahl und bezogen auf 100 Gewichtsteile Komponente A. | | | | |

Die erfindungsgemäßen Polyethercarbonatpolyole ließen sich problemlos zu Polyurethan-Weichformschaumstoffen verarbeiten (Beispiel 5 bis 7), wobei die Polyurethan-Weichformschaumstoffe ein gutes Eigenschaftsniveau aufwiesen.

## Patentansprüche

1. Verfahren zur Herstellung von Polyethercarbonatpolyolen mit primären Hydroxyl-Endgruppen, umfassend die Schritte:

   1. Reaktion einer aktive Wasserstoffatome aufweisenden Starterverbindung mit Kohlendioxid und mit einem Epoxid der allgemeinen Formel (II):

   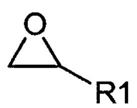

   (II)

   wobei R1 für Wasserstoff, einen Alkylrest oder einen Arylrest steht und mit der Maßgabe, dass ≥ 0 Gewichts-% bis ≤ 30 Gewichts-%, bezogen auf die Gesamtmenge des eingesetzten Epoxids (II), Ethylenoxid sind, wobei die Reaktion in Gegenwart eines Doppelmetallcyanid-Katalysators durchgeführt wird;
   2. Reaktion des in Schritt 1. erhaltenen Produkts mit einem zyklischen Carbonsäureanhydrid; und
   3. Reaktion des in Schritt 2. erhaltenen Produkts mit Ethylenoxid in Gegenwart eines Katalysators, welcher pro Molekül mindestens ein Stickstoffatom umfasst, wobei nicht-zyklische, identisch substituierte tertiäre Amine ausgenommen sind.

2. Verfahren gemäß Anspruch 1, wobei die in Schritt 1. eingesetzte Starterverbindung ein Poly(oxyalkylen)-Polyol oder ein Poly(oxyalkylen)carbonat-Polyol ist, die eine Anzahl an Hydroxylgruppen pro Molekül von ≥ 2,0 bis ≤ 5,0 und ein zahlenmittleres Molekulargewicht von ≥ 450 g/mol bis ≤ 2000 g/mol aufweisen

3. Verfahren gemäß Anspruch 1, wobei in dem Epoxid der allgemeinen Formel (II) R1 Wasserstoff, Methyl, Ethyl, n-Propyl, iso-Propyl, n-Butyl, sec-Butyl, iso-Butyl, tert-Butyl, Cyclohexyl und/oder Phenyl ist.

4. Verfahren gemäß Anspruch 1, wobei das in Schritt 2. eingesetzte zyklische Carbonsäureanhydrid ausgewählt ist aus der Gruppe umfassend Phthalsäureanhydrid, Tetrahydrophthalsäureanhydrid, Bernsteinsäureanhydrid und/oder Maleinsäureanhydrid.

5. Verfahren gemäß Anspruch 1, wobei der in Schritt 3. eingesetzte Katalysator ausgewählt ist aus der Gruppe umfassend:

(A) Amine der allgemeinen Formel (IX):

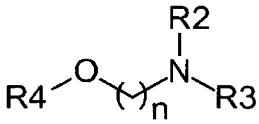

(IX)

wobei gilt:

R2 und R3 sind unabhängig voneinander Wasserstoff, Alkyl oder Aryl; oder
R2 und R3 bilden gemeinsam mit dem sie tragenden N-Atom einen aliphatischen, ungesättigten oder aromatischen Heterozyklus;
n ist eine ganze Zahl von 1 bis 10;
R4 ist Wasserstoff, Alkyl oder Aryl; oder
R4 steht für $-(CH_2)_x-N(R41)(R42)$, wobei gilt:

R41 und R42 sind unabhängig voneinander Wasserstoff, Alkyl oder Aryl; oder
R41 und R42 bilden gemeinsam mit dem sie tragenden N-Atom einen aliphatischen, ungesättigten oder aromatischen Heterozyklus;
x ist eine ganze Zahl von 1 bis 10;

(B) Amine der allgemeinen Formel (X):

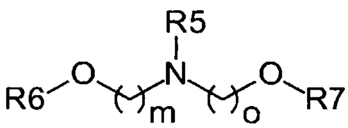

(X)

wobei gilt:

R5 ist Wasserstoff, Alkyl oder Aryl;
R6 und R7 sind unabhängig voneinander Wasserstoff, Alkyl oder Aryl;
m und o sind unabhängig voneinander eine ganze Zahl von 1 bis 10;
und/oder:

(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

6. Verfahren gemäß Anspruch 1, wobei in Schritt 2. das molare Verhältnis von zyklischem Anhydrid zu Hydroxylgruppen in dem in Schritt 1. erhaltenen Produkt ≥ 0,75 : 1 bis ≤ 1,3 : 1 beträgt.

7. Verfahren gemäß Anspruch 1, wobei in Schritt 3. der Katalysator, welcher pro Molekül mindestens ein Stickstoffatom umfasst, bezogen auf die Gesamtmasse des Reaktionsansatzes in Schritten 2. und 3. in einem Anteil von ≥ 500 ppm bis ≤ 1500 ppm vorliegt.

8. Verfahren gemäß Anspruch 1, wobei in Schritt 3. das molare Verhältnis von Ethylenoxid zu Hydroxylgruppen in dem in Schritt 1. erhaltenen Produkt ≥ 0,90 : 1 bis ≤ 5,0 : 1 beträgt.

**9.** Polyethercarbonatpolyol mit primären Hydroxyl-Endgruppen, erhältlich durch ein Verfahren gemäß Anspruch 1, umfassend einen Polyethercarbonatblock, eine endständige Hydroxyethylgruppe sowie eine den Polyethercarbonatblock und die endständige Hydroxyethylgruppe verbindende Diester-Einheit und wobei der molare Anteil an endständigen Doppelbindungen, bezogen auf alle Endgruppen des Polyethercarbonatpolyols, ≥ 0 Milliäquivalent pro kg bis ≤ 10 Milliäquivalent pro kg beträgt.

**10.** Polyethercarbonatpolyol gemäß Anspruch 9, wobei der molare Anteil von primären Hydroxylgruppen ≥ 50 mol-% bis ≤ 1.00 mol-% beträgt.

**11.** Polyethercarbonatpolyol gemäß Anspruch 9 mit einer OH-Zahl von ≥ 10 mg KOH/g bis ≤ 100 mg KOH/g.

**12.** Polyethercarbonatpolyol gemäß Anspruch 9 mit einer Säurezahl von ≥ 0,01 mg KOH/g bis ≤ 5 mg KOH/g.

**13.** Polyethercarbonatpolyol-Zusammensetzung, umfassend ein Polyethercarbonatpolyol gemäß Anspruch 10 sowie weiterhin:

(A) Amine der allgemeinen Formel (XI):

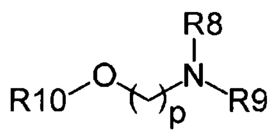

(XI)

wobei gilt:

R8 und R9 sind unabhängig voneinander Wasserstoff, Alkyl oder Aryl; oder
R8 und R9 bilden gemeinsam mit dem sie tragenden N-Atom einen aliphatischen, ungesättigten oder aromatischen Heterozyklus;
p ist eine ganze Zahl von 1 bis 10, also 1, 2, 3, 4, 5, 6, 7, 8, 9 oder 10;
R10 ist Wasserstoff, Alkyl oder Aryl; oder
R10 steht für $-(CH_2)_y-N(R11)(R12)$, wobei gilt:

R11 und R12 sind unabhängig voneinander Wasserstoff, Alkyl oder Aryl; oder
R11 und R12 bilden gemeinsam mit dem sie tragenden N-Atom einen aliphatischen, ungesättigten oder aromatischen Heterozyklus;
y ist eine ganze Zahl von 1 bis 10, also 1, 2, 3, 4, 5, 6, 7, 8, 9 oder 10;

(B) Amine der allgemeinen Formel (XII):

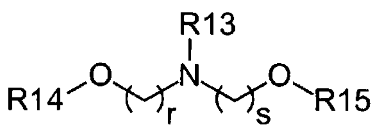

(XII)

wobei gilt:

R13 ist Wasserstoff, Alkyl oder Aryl;
R14 und R15 sind unabhängig voneinander Wasserstoff, Alkyl oder Aryl;
r und s sind unabhängig voneinander eine ganze Zahl von 1 bis 10, also 1, 2, 3, 4, 5, 6, 7, 8, 9 oder 10;
und/oder:

(C) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

**14.** Polyurethanpolymer, erhältlich aus der Reaktion eines Polyisocyanats mit einem Polyethercarbonatpolyol gemäß Anspruch 9 oder einer Polyethercarbonatpolyol-Zusammensetzung gemäß Anspruch 13.

**15.** Polyurethanpolymer gemäß Anspruch 14, wobei es sich um einen Polyurethan-Weichblockschaumstoff oder um einen Polyurethan-Weichformschaumstoff handelt.

## Claims

**1.** Process for the preparation of polyether carbonate polyols with primary hydroxyl end groups, comprising the steps:

1. reaction of a starter compound containing active hydrogen atoms with carbon dioxide and with an epoxide of the general formula (II):

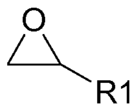

(II)

wherein R1 represents hydrogen, an alkyl radical or an aryl radical and with the proviso that ≥ 0 % by weight to ≤ 30 % by weight, based on the total amount of the epoxide (II) employed, is ethylene oxide,
wherein the reaction is carried out in the presence of a double metal cyanide catalyst;
2. reaction of the product obtained in step 1. with a cyclic carboxylic acid anhydride; and
3. reaction of the product obtained in step 2. with ethylene oxide in the presence of a catalyst which contains at least one nitrogen atom per molecule, excluding non-cyclic tertiary amines with identical substituents.

**2.** Process according to claim 1, wherein the starter compound employed in step 1. is a poly(oxyalkylene) polyol or a poly(oxyalkylene) carbonate polyol which has a number of hydroxyl groups per molecule of from ≥ 2.0 to ≤ 5.0 and a number-average molecular weight of from ≥ 450 g/mol to ≤ 2,000 g/mol.

**3.** Process according to claim 1, wherein in the epoxide of the general formula (II) R1 is hydrogen, methyl, ethyl, n-propyl, iso-propyl, n-butyl, sec-butyl, iso-butyl, tert-butyl, cyclohexyl and/or phenyl.

**4.** Process according to claim 1, wherein the cyclic carboxylic acid anhydride employed in step 2. is selected from the group consisting of phthalic anhydride, tetrahydrophthalic anhydride, succinic anhydride and/or maleic anhydride.

**5.** Process according to claim 1, wherein the catalyst employed in step 3. is selected from the group consisting of:

(A) amines of the general formula (IX):

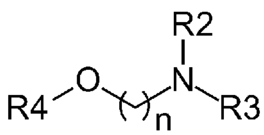

(IX)

wherein:

R2 and R3 independently of each other are hydrogen, alkyl or aryl; or
R2 and R3 together with the N atom carrying them form an aliphatic, unsaturated or aromatic heterocycle;
n is an integer from 1 to 10;
R4 is hydrogen, alkyl or aryl; or
R4 represents $-(CH_2)_x-N(R41)(R42)$, wherein:

R41 and R42 independently of each other are hydrogen, alkyl or aryl; or
R41 and R42 together with the N atom carrying them form an aliphatic, unsaturated or aromatic heterocycle;
x is an integer from 1 to 10;

(B) amines of the general formula (X):

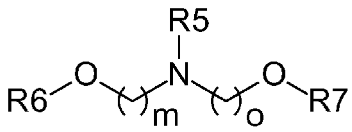

(X)

wherein:

R5 is hydrogen, alkyl or aryl;
R6 and R7 independently of each other are hydrogen, alkyl or aryl;
m and o independently of each other are an integer from 1 to 10;
and/or:

(C) diazabicyclo[2.2.2]octane, diazabicyclo[5.4.0]undec-7-ene, dialkylbenzylamine, dimethylpiperazine, 2,2'-dimorpholinyldiethyl ether and/or pyridine.

**6.** Process according to claim 1, wherein in step 2. the molar ratio of cyclic anhydride to hydroxyl groups in the product obtained in step 1. is ≥ 0.75 : 1 to ≤ 1.3 : 1.

**7.** Process according to claim 1, wherein in step 3. the catalyst which contains at least one nitrogen atom per molecule is present in a content of from ≥ 500 ppm to ≤ 1,500 ppm, based on the total weight of the reaction mixture in steps 2. and 3.

**8.** Process according to claim 1, wherein in step 3. the molar ratio of ethylene oxide to hydroxyl groups in the product obtained in step 1. is ≥ 0.90 : 1 to ≤ 5.0 : 1.

**9.** Polyether carbonate polyol with primary hydroxyl end groups, obtainable by a process according to claim 1, comprising a polyether carbonate block, a terminal hydroxyethyl group and a diester unit which joins the polyether carbonate block and the terminal hydroxyethyl group, and wherein the molar content of terminal double bonds, based on all the end groups of the polyether carbonate polyol, is ≥ 0 milliequivalent per kg to ≤ 10 milliequivalents per kg.

**10.** Polyether carbonate polyol according to claim 9, wherein the molar content of primary hydroxyl groups is ≥ 50 mol% to ≤ 100 mol%.

**11.** Polyether carbonate polyol according to claim 9, with an OH number of from ≥ 10 mg of KOH/g to ≤ 100 mg of KOH/g.

**12.** Polyether carbonate polyol according to claim 9, with an acid number of from ≥ 0.01 mg of KOH/g to ≤ 5 mg of KOH/g.

**13.** Polyether carbonate polyol composition, comprising a polyether carbonate polyol according to claim 10 and furthermore:

(A) amines of the general formula (XI):

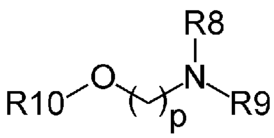

(XI)

wherein:

R8 and R9 independently of each other are hydrogen, alkyl or aryl; or
R8 and R9 together with the N atom carrying them form an aliphatic, unsaturated or aromatic heterocycle;
p is an integer from 1 to 10, that is to say 1, 2, 3, 4, 5, 6, 7, 8, 9 or 10; R10 is hydrogen, alkyl or aryl; or R10 represents $-(CH_2)_y-N(R11)(R12)$, wherein:

R11 and R12 independently of each other are hydrogen, alkyl or

aryl; or
R11 and R12 together with the N atom carrying them form an aliphatic, unsaturated or aromatic heterocycle;
y is an integer from 1 to 10, that is to say 1, 2, 3, 4, 5, 6, 7, 8, 9 or 10;

(B) amines of the general formula (XII):

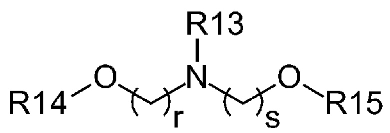
(XII)

wherein:

R13 is hydrogen, alkyl or aryl;
R14 and R15 independently of each other are hydrogen, alkyl or aryl;
r and s independently of each other are an integer from 1 to 10, that is to say 1, 2, 3, 4, 5, 6, 7, 8, 9 or 10;

and/or:
(C) diazabicyclo[2.2.2]octane, diazabicyclo[5.4.0]undec-7-ene, dialkylbenzylamine, dimethylpiperazine, 2,2'-dimorpholinyldiethyl ether and/or pyridine.

**14.** Polyurethane polymer obtainable from the reaction of a polyisocyanate with a polyether carbonate polyol according to claim 9 or a polyether carbonate polyol composition according to claim 13.

**15.** Polyurethane polymer according to claim 14, which is a polyurethane flexible block foam or a polyurethane flexible moulded foam.

**Revendications**

**1.** Procédé pour la préparation de polyéthercarbonatepolyols comportant des groupes terminaux hydroxy primaires, comprenant les étapes :

1. réaction d'un composé de départ comportant des atomes d'hydrogène avec du dioxyde de carbone et avec un époxyde de formule générale (II) :

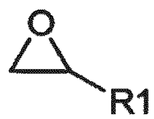
(II)

dans laquelle R1 représente un atome d'hydrogène, un radical alkyle ou un radical aryle et étant entendu que ≥ 0 % en poids à ≤ 30 % en poids, par rapport à la quantité totale de l'époxyde (II) utilisé, consistent en oxyde d'éthylène,
la réaction étant effectuée en présence d'un catalyseur de type cyanure bimétallique ;
2. réaction du produit obtenu dans l'étape 1 avec un anhydride d'acide carboxylique cyclique ; et
3. réaction du produit obtenu dans l'étape 2 avec de l'oxyde d'éthylène en présence d'un catalyseur qui comprend par molécule au moins un atome d'azote, les amines tertiaires non cycliques à substitution identique étant exclues.

**2.** Procédé selon la revendication 1, dans lequel le composé de départ utilisé dans l'étape 1 est un poly(oxyalkylène)-polyol ou un poly(oxyalkylène)carbonate-polyol, qui présentent un nombre de groupes hydroxy par molécule de ≥ 2,0 à ≤ 5,0 et une masse moléculaire moyenne en nombre de ≥ 450 g/mole à ≤ 2 000 g/mole.

3. Procédé selon la revendication 1, dans lequel dans l'époxyde de formule générale (II) R1 est un atome d'hydrogène, le groupe méthyle, éthyle, n-propyle, isopropyle, n-butyle, sec-butyle, isobutyle, tert-butyle, cyclohexyle et/ou phényle.

4. Procédé selon la revendication 1, dans lequel l'anhydride d'acide carboxylique cyclique utilisé dans l'étape 2 est choisi dans le groupe comprenant l'anhydride phtalique, l'anhydride tétrahydrophtalique, l'anhydride succinique et/ou l'anhydride maléique.

5. Procédé selon la revendication 1, dans lequel le catalyseur utilisé dans l'étape 3 est choisi dans le groupe comprenant :

(A) des amines de formule générale (IX) :

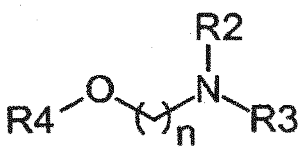

(IX)

dans laquelle :

R2 et R3 représentent indépendamment l'un de l'autre un atome d'hydrogène, un groupe alkyle ou aryle ; ou
R2 et R3 forment ensemble avec l'atome d'azote qui les portent un hétérocycle aliphatique, insaturé ou aromatique ;
n est un nombre entier valant de 1 à 10 ;
R4 est un atome d'hydrogène, un groupe alkyle ou aryle ; ou
R4 représente $-(CH_2)_x-N(R41)(R42)$, où :

R41 et R42 représentent indépendamment l'un de l'autre un atome d'hydrogène, un groupe alkyle ou aryle ; ou
R41 et R42 forment ensemble avec l'atome d'azote qui les portent un hétérocycle aliphatique, insaturé ou aromatique ;
x est un nombre entier valant de 1 à 10 ;

(B) des amines de formule générale (X) :

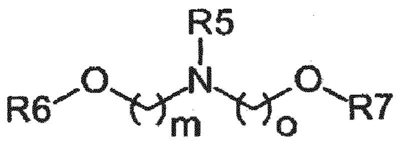

(X)

où :

R5 est un atome d'hydrogène, un groupe alkyle ou aryle ;
R6 et R7 représentent indépendamment l'un de l'autre un atome d'hydrogène, un groupe alkyle ou aryle ;
m et o représentent indépendamment l'un de l'autre un nombre entier valant de 1 à 10 ;
et/ou :

(C) le diazabicyclo[2.2.2]octane, le diazabicyclo[5.4.0]undéc-7-ène, une dialkylbenzylamine, la diméthylpipérazine, l'éther 2,2'-dimorpholinyldiéthylique et/ou la pyridine.

6. Procédé selon la revendication 1, dans lequel dans l'étape 2 le rapport molaire de l'anhydride cyclique aux groupes hydroxy dans le produit obtenu dans l'étape 1 vaut de $\geq 0,75 : 1$ à $\leq 1,3 : 1$.

7. Procédé selon la revendication 1, dans lequel dans l'étape 3 le catalyseur qui comprend au moins un atome d'azote par molécule est présent, par rapport à la masse totale du mélange réactionnel dans les étapes 2 et 3, en une proportion de ≥ 500 ppm à ≤ 1 500 ppm.

8. Procédé selon la revendication 1, dans lequel dans l'étape 3 le rapport molaire de l'oxyde d'éthylène aux groupes hydroxy dans le produit obtenu dans l'étape 1 vaut de ≥ 0,90 : 1 à ≤ 5,0 : 1.

9. Polyéthercarbonatepolyol comportant des groupes terminaux hydroxy primaires, pouvant être obtenu par un procédé selon la revendication 1, comprenant un bloc polyéthercarbonate, un groupe hydroxyéthyle terminal ainsi qu'une unité diester reliant le bloc polyéthercarbonate et le groupe hydroxyéthyle terminal et dans lequel la proportion molaire de doubles liaisons en bout de chaîne, par rapport à tous les groupes terminaux du polyéthercarbonatepolyol, vaut de ≥ 0 milliéquivalent par kg à ≤ 10 milliéquivalents par kg.

10. Polyéthercarbonatepolyol selon la revendication 9, dans lequel la proportion molaire des groupes hydroxy primaires vaut de ≥ 50 % en moles à ≤ 100 % en moles.

11. Polyéthercarbonatepolyol selon la revendication 9, ayant un indice de groupes OH de ≥ 10 mg de KOH/g à ≤ 100 mg de KOH/g.

12. Polyéthercarbonatepolyol selon la revendication 9, ayant un indice d'acide de ≥ 0,01 mg de KOH/g à ≤ 5 mg de KOH/g.

13. Composition de polyéthercarbonatepolyol, comprenant un polyéthercarbonatepolyol selon la revendication 10 ainsi qu'en outre :

(A) des amines de formule générale (XI) :

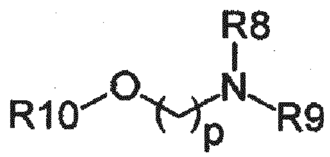

(XI)

dans laquelle :

R8 et R9 représentent indépendamment l'un de l'autre un atome d'hydrogène, un groupe alkyle ou aryle ; ou
R8 et R9 forment ensemble avec l'atome d'azote qui les portent un hétérocycle aliphatique, insaturé ou aromatique ;
p est un nombre entier valant de 1 à 10, à savoir 1, 2, 3, 4, 5, 6, 7, 8, 9 ou 10;
R10 est un atome d'hydrogène, un groupe alkyle ou aryle ; ou
R10 représente $-(CH2)_y-N(R11)(R12)$, où :

R11 et R12 représentent indépendamment l'un de l'autre un atome d'hydrogène, un groupe alkyle ou aryle ; ou
R11 et R12 forment ensemble avec l'atome d'azote qui les portent un hétérocycle aliphatique, insaturé ou aromatique ;
y est un nombre entier valant de 1 à 10, à savoir 1, 2, 3, 4, 5, 6, 7, 8, 9 ou 10;

(B) des amines de formule générale (XII) :

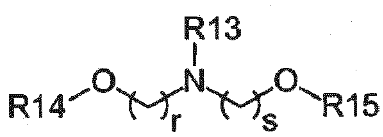

(XII)

où :

R13 est un atome d'hydrogène, un groupe alkyle ou aryle ;
R14 et R15 représentent indépendamment l'un de l'autre un atome d'hydrogène, un groupe alkyle ou aryle ;
r et s représentent indépendamment l'un de l'autre un nombre entier valant de 1 à 10, à savoir 1, 2, 3, 4, 5, 6, 7, 8, 9 ou 10 ;
et/ou :

(C) du diazabicyclo[2.2.2]octane, diazabicyclo[5.4.0]undéc-7-ène, une dialkylbenzylamine, de la diméthylpipérazine, de l'éther 2,2'-dimorpholinyldiéthylique et/ou de la pyridine.

**14.** Polymère polyuréthane, pouvant être obtenu à partir de la réaction d'un polyisocyanate avec un polyéthercarbonatepolyol selon la revendication 9 ou une composition de polyéthercarbonatepolyol selon la revendication 13.

**15.** Polymère polyuréthane selon la revendication 14, pour lequel il s'agit d'une mousse en bloc souple de polyuréthane ou d'une mousse moulée souple de polyuréthane.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4487853 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 10163170 A
- JP 4145123 B
- WO 0139883 A
- WO 0180994 A
- WO 2004081082 A
- EP 355000 A


### In der Beschreibung aufgeführte Nicht-Patentliteratur


- **Z. B. INOUE et al.** *Copolymerization of Carbon Dioxide and Epoxide with Organometallic Compounds,* 1969, vol. 130, 210-220
- Kunststoff-Handbuch. Carl-Hanser-Verlag, 1993, vol. VII, 139-265